# EUROPÄISCHE PATENTSCHRIFT

(11) **EP 0 978 735 B1**
(45) Veröffentlichungstag und Bekanntmachung des Hinweises auf die Patenterteilung: **06.05.2004**
(21) Anmeldenummer: 99111799.5
(22) Anmeldetag: 18.06.1999
(51) Int. Cl.: G01V 8/20

(54) **Lichtgitter zur Überwachung eines flächigen Bereichs**
Light curtain for monitoring a planar zone
Rideau de lumière pour la surveillance d'une zone plane

(30) Priorität: 07.08.1998 DE 19835884
(43) Veröffentlichungstag der Anmeldung: 09.02.2000
(73) Patentinhaber: Sick AG, 79183 Waldkirch, Breisgau (DE)
(72) Erfinder: Wenzler, Rainer, 79211 Denzlingen (DE); Mutter, Gerhard, 79837 Ibach (DE)
(74) Vertreter: Manitz, Finsterwald & Partner GbR

(56) Entgegenhaltungen:
- US-A- 4 385 508
- US-A- 5 629 674

## Beschreibung

Die Erfindung betrifft ein Lichtgitter zur Überwachung eines flächigen Überwachungsbereichs, mit wenigstens einer Hauptsendeeinrichtung zum Aussenden von Hauptsendelichtstrahlen entlang des Überwachungsbereichs und wenigstens einer Hauptempfangseinrichtung zum Empfangen von Sendelichtstrahlen, sowie ein Verfahren zum Betrieb eines derartigen Lichtgitters, gemäß dem Oberbegriff der Ansprüche 1 und 7.

Solche Lichtgitter dienen beispielsweise zur Absicherung von Gefahrenzonen. Hierfür kann das Lichtgitter ein Gegenstandsfeststellungssignal auslösen, wenn ein Objekt, wie zum Beispiel eine Hand eines Arbeiters an einer Werkmaschine, in den Überwachungsbereich eindringt. Nachteilig an den bekannten Lichtgittern ist, daß auch beabsichtigt in den Überwachungsbereich eindringende Gegenstände, wie zum Beispiel Teile einer Werkzeugmaschine oder eines Werkstücks, in unerwünschter Weise zur Auslösung eines Gegenstandsfeststellungssignals führen.

Die US 5,629,674 offenbart eine Überwachungseinrichtung für eine Regalgasse. Diese Überwachungseinrichtung besitzt für jede Gasse in unterschiedlicher Höhe zwei Paare von jeweils versetzt zueinander angeordneten Lichtschranken. Aufgrund der unterschiedlichen Anordnungshöhe der Lichtschrankenpaare können Gabelstapler, die in die jeweilige Gasse hineinfahren, von Personen unterschieden werden, die die Gasse betreten.

Aus der US 4,385,508 ist eine Schutzvorrichtung zur Benutzung in einer Strickmaschine bekannt, durch die die Bewegungszone eines hin- und herfahrenden Schlittens mittels Lichtschranken geschützt werden soll.

Es ist eine Aufgabe der Erfindung, ein Lichtgitter und ein Verfahren der eingangs genannten Art zu schaffen, bei denen das beabsichtigte Eindringen von Gegenständen in den Überwachungsbereich in einer variablen Position kein Gegenstandsfeststellungssignal auslöst.

Diese Aufgabe wird durch ein Lichtgitter mit den Merkmalen des Anspruchs 1 gelöst. Dieses Lichtgitter besitzt wenigstens eine Zwischenempfangseinrichtung und eine Zwischensendeeinrichtung, die innerhalb des Überwachungsbereichs angeordnet werden können, um aus dem Überwachungsbereich eine überwachungsfreie Zone auszublenden. Hierfür ist die Zwischensendeeinrichtung bezüglich der Strahlrichtung der Hauptsendelichtstrahlen im wesentlichen hinter der Zwischenempfangseinrichtung angeordnet, so daß weder Sendelichtstrahlen in die überwachungsfreie Zone ausgesendet werden, noch Sendelichtstrahlen aus der überwachungsfreien Zone erwartet werden. Dadurch kann ein Gegenstand - in diesem Zusammenhang als Ausblendgegenstand bezeichnet - in beabsichtigter Weise in die überwachungsfreie Zone des Überwachungsbereichs eindringen, ohne Sendelichtstrahlen zu unterbrechen und ohne ein Gegenstandsfeststellungssignal auszulösen.

In einer Ausführungsform dieses Lichtgitters sind mehrere, insbesondere zwei Paare bestehend aus Zwischenempfangseinrichtung und zugeordneter Zwischensendeeinrichtung dergestalt innerhalb des Überwachungsbereichs vorgesehen, daß eine Zwischenempfangseinrichtung von Hauptsendelichtstrahlen und eine andere Zwischenempfangseinrichtung von Zwischensendelichtstrahlen beaufschlagt wird.

Bevorzugte Ausführungsformen des Lichtgitters gemäß Anspruch 1 sind in den Unteransprüchen 2 bis 6 beschrieben.

Die Aufgabe der Erfindung wird außerdem gelöst durch ein Verfahren gemäß Anspruch 7. Bei diesem Verfahren wird, entsprechend dem Aufbau des erfindungsgemäßen Lichtgitters, ein Überwachungsbereich gebildet, indem eine Hauptsendeeinrichtung und eine Hauptempfangseinrichtung einander gegenüberstehend angeordnet werden. Innerhalb dieses Überwachungsbereichs werden eine Zwischenempfangseinrichtung und/oder eine Zwischensendeeinrichtung positioniert.

Während eines Überwachungsbetriebs beaufschlagen die jeweiligen Sendeeinrichtungen die betreffenden Empfangseinrichtungen mit Sendelichtstrahlen, wobei innerhalb des Überwachungsbereichs wenigstens eine überwachungsfreie Zone gebildet wird, nämlich indem eine Zwischenempfangseinrichtung Sendelichtstrahlen beabsichtigt unterbricht oder Sendelichtstrahlen erst von einer innerhalb des Überwachungsbereichs angeordneten Zwischensendeeinrichtung und somit nicht entlang des gesamten Überwachungsbereichs ausgesendet werden. Bei Detektion einer unerwünschten Unterbrechung eines Sendelichtstrahls durch einen Gegenstand, der den Überwachungsbereich außerhalb der ausgeblendeten Zonen durchdringt, wird ein Gegenstandsfeststellungssignal erzeugt.

Nachfolgend wird die Erfindung an Hand von Ausführungsbeispielen unter Bezugnahme auf die Zeichnungen beschrieben; in diesen zeigen:
- Fig. 1: ein erfindungsgemäßes Lichtgitter mit zwei Paaren von Zwischenempfangseinrichtung und zugeordneter Zwischensendeeinrichtung,
- Fig. 2: eine Ausführungsform des Lichtgitters gemäß Fig. 1, und
- Fig. 3: ein weiteres Lichtgitter mit einer einzelnen Zwischenempfangseinrichtung und einer einzelnen Zwischensendeeinrichtung.

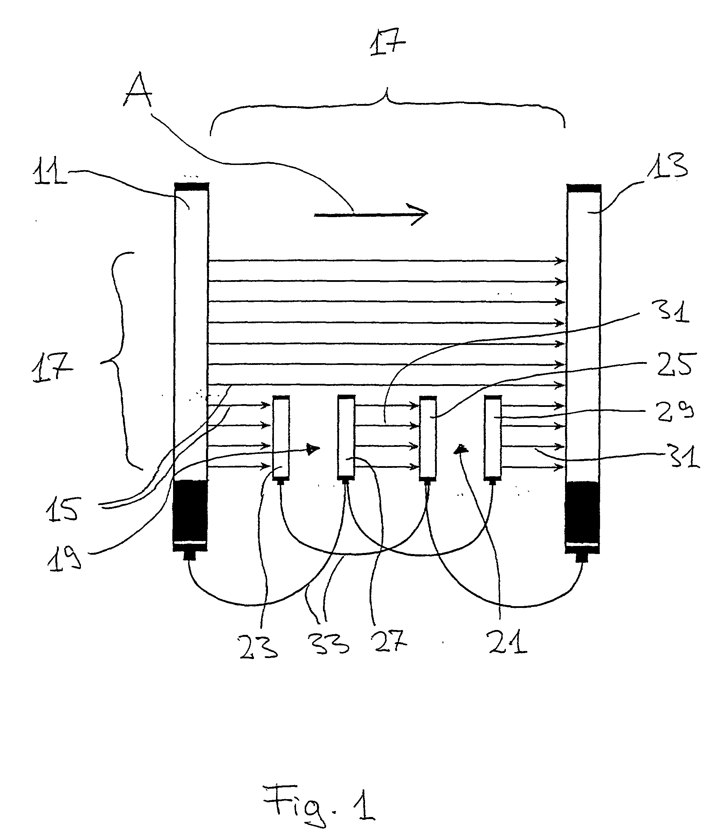

Fig. 1 zeigt eine Hauptsendeeinrichtung 11 und eine hierzu gegenüberliegende Hauptempfangseinrichtung 13. An der Hauptsendeeinrichtung 11 sind mehrere nicht dargestellte Sendeelemente angeordnet, welche Hauptsendelichtstrahlen 15 in Richtung der Hauptempfangseinrichtung 13 aussenden. Die Hauptsendelichtstrahlen 15 verlaufen gleichsinnig parallel zueinander entlang einer Strahlrichtung A. An der Hauptempfangseinrichtung 13 sind mehrere Empfangselemente angeordnet, von denen einige von den Hauptsendelichtstrahlen 15 beaufschlagt werden. Ein Überwachungsbereich 17 erstreckt sich zwischen den Sendeelementen der Hauptsendeeinrichtung 11 und den Empfangselementen der Hauptempfangseinrichtung 13. Innerhalb des Überwachungsbereichs 17 sind eine erste und eine zweite überwachungsfreie Zone 19 bzw. 21 auf folgende Weise gebildet: Jede überwachungsfreie Zone 19, 21 ist entgegen der Strahlrichtung A durch eine Zwischenempfangseinrichtung 23 bzw. 25, und in Strahlrichtung A durch eine Zwischensendeeinrichtung 27 bzw. 29 begrenzt. Die Zwischensendeeinrichtungen 27, 29 senden Zwischensendelichtstrahlen 31 gleichsinnig parallel zu der Strahlrichtung A aus. Diese Zwischensendelichtstrahlen 31 beaufschlagen die jeweils in Strahlrichtung A benachbarte Empfangseinrichtung 25 bzw. 13.

Die Hauptsendeeinrichtung 11 und die beiden Zwischensendeeinrichtungen 27, 29, sowie die Hauptempfangseinrichtung 13 und die beiden Zwischenempfangseinrichtungen 23, 25 sind jeweils über flexible Kabel 33 seriell miteinander verbunden.

Bei dem erfindungsgemäßen Überwachungsverfahren ist ein Überwachungsbetrieb vorgesehen, bei dem die überwachungsfreien Zonen 19, 21 aus dem Überwachungsbereich 17 ausgeblendet werden und bei dem gleichzeitig alle anderen Teile des Überwachungsbereichs 17 auf eine Unterbrechung der Sendelichtstrahlen 15, 31 und somit auf ein Eindringen eines Gegenstandes überwacht werden. Vorzugsweise senden die Hauptsendeeinrichtung 11 und die Zwischensendeeinrichtungen 27, 29 die Sendelichtstrahlen 15 bzw. 31 in gleichzeitig getriggertem Pulsbetrieb oder in kontinuierlichem Dauerlichtbetrieb.

Die Zwischensendeeinrichtung 27 und die Zwischenempfangseinrichtung 25 können auch vertauscht zueinander angeordnet sein, so daß zwischen den beiden überwachungsfreien Zonen 19, 21 die Zwischensendelichtstrahlen 31 entgegengesetzt parallel zu der Strahlrichtung A verlaufen.

Es ist ein Vorteil des erfindungsgemäßen Lichtgitters, daß die Zwischenempfangseinrichtung 23, 25 und/oder die Zwischensendeeinrichtung 27, 29 räumlich variabel innerhalb des Überwachungsbereichs angeordnet werden können, und zwar auch während des laufenden Überwachungsbetriebs. Dadurch läßt sich die entsprechende überwachungsfreie Zone 19, 21 selbst während des Überwachungsbetriebs beliebig innerhalb des Überwachungsbereichs 17 verschieben. Beispielsweise kann die überwachungsfreie Zone 19, 21 der Bewegung eines den Überwachungsbereich 17 beabsichtigt durchdringenden Teils einer Werkmaschine folgen, beispielsweise der Bewegung eines Trägerarms. Hierfür kann die betreffende Zwischenempfangseinrichtung 23, 25 und die betreffende Zwischensendeeinrichtung 27, 29 an diesem Teil der Werkmaschine befestigt sein.

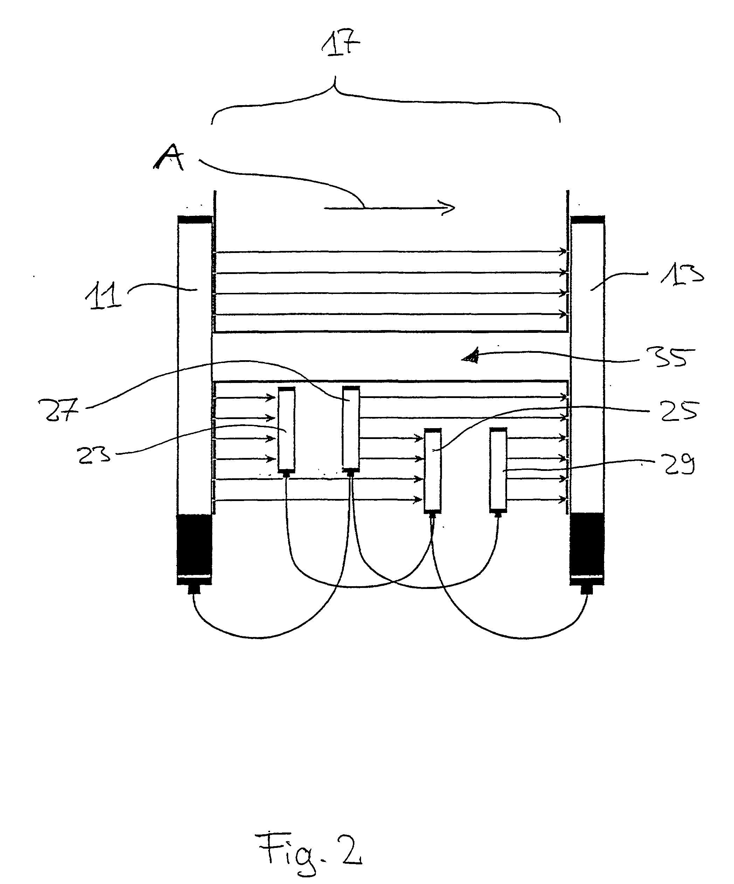

Fig. 2 zeigt eine derartige Verschiebung der überwachungsfreien Zone 19 nach oben. Selbstverständlich ist vorgesehen, daß die mit der Zwischenempfangseinrichtung 23 und der Zwischensendeeinrichtung 27 verbundenen Kabel 33 keine Sendelichtstrahlen 15, 31 unterbrechen. Diese Kabel 33 verlaufen also außerhalb der Ebene, in der sich der Überwachungsbereich 17 erstreckt. Anstelle der Kabel 33 kann eine autonome Energieversorgung der Einrichtungen 23, 25, 27, 29 sowie eine drahtlose Signalübertragung vorgesehen sein.

Fig. 2 zeigt außerdem eine weitere überwachungsfreie Zone 35, die sich parallel zu der Strahlrichtung A zwischen der Hauptsendeeinheit 11 und der Hauptempfangseinrichtung 13 erstreckt. Diese überwachungsfreie Zone 35 ist dadurch gebildet, daß diejenigen Empfangselemente, welche die Zone 35 in Strahlrichtung A begrenzen, ausgeschaltet sind oder zumindest keinen Empfang eines Sendelichtstrahls 15, 31 erwarten. Gleichzeitig können - wie in Fig. 2 gezeigt - die entsprechenden Sendeelemente der Hauptsendeeinrichtung 11 abgeschaltet sein, ohne daß dies jedoch zwingend erforderlich wäre.

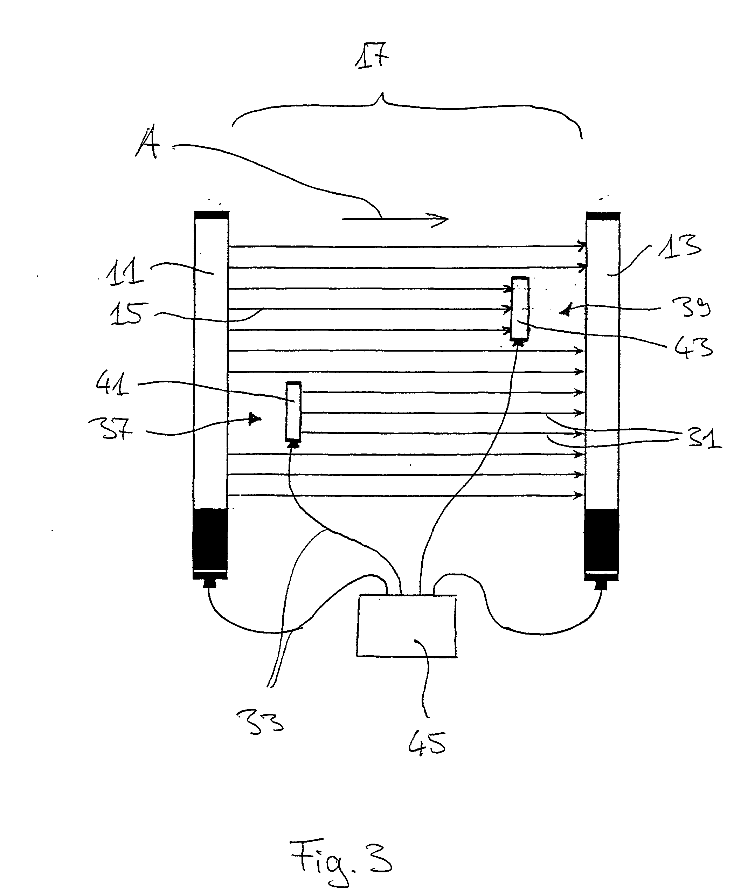

Fig. 3 zeigt ein weiteres erfindungsgemäßes Lichtgitter bei dem sich zwischen einer Hauptsendeeinrichtung 11 und einer Hauptempfangseinrichtung 13 ein Überwachungsbereich 17 erstreckt. Dieser Überwachungsbereich 17 besitzt an seiner Umrandung der Hauptsendeeinrichtung 11 benachbart eine überwachungsfreie Zone 37 und der Hauptempfangseinrichtung 13 benachbart eine überwachungsfreie Zone 39.

Die überwachungsfreie Zone 37 ist dadurch gebildet, daß eine Zwischensendeeinrichtung 41 Zwischensendelichtstrahlen 31 in Strahlrichtung A aussendet, während bezüglich dieser Zwischensendeeinrichtung 41 entgegen der Strahlrichtung A keine Hauptsendelichtstrahlen 15 ausgesendet werden oder eventuell ausgesendete Hauptsendelichtstrahlen nicht detektiert werden.

Die überwachungsfreie Zone 39 entsteht, indem eine von der Hauptempfangseinrichtung 13 entgegen der Strahlrichtung A beabstandet angeordnete Zwischenempfangseinrichtung 43 die Hauptsendelichtstrahlen 15 der Hauptsendeeinrichtung 11 empfängt, wobei nach dieser Zwischenempfangseinrichtung 43 keine weiteren Sendelichtstrahlen in Richtung der Hauptempfangsrichtung 13 ausgesendet werden.

Die Zwischensendeeinrichtung 41 und die Zwischenempfangseinrichtung 43 sind - wie auch die Hauptempfangseinrichtung 11 und die Hauptempfangseinrichtung 13 - über flexible Kabel 33 parallel mit einer zentralen Steuer- und Auswerteeinheit 45 verbunden.

Vor dem Beginn des Überwachungsbetriebs der in den Fig. 1 bis 3 gezeigten Lichtgitter kann ein Initialisierungsbetrieb durchgeführt werden, bei dem zunächst diejenigen Sende- und Empfangselemente der Einrichtungen 11, 13, 23, 25, 27, 29, 41, 43 festgelegt werden, die zur Ausblendung von überwachungsfreien Zonen 19, 21, 35, 37, 39 keine Sendelichtstrahlen aussenden bzw. empfangen sollen, und bei dem anschließend Referenzsignale der entsprechend aktivierten Empfangselemente ermittelt werden, während kein weiterer Gegenstand außer den genannten Einrichtungen den Überwachungsbereich 17 unerwünscht durchdringt.

### Bezugszeichenliste

- 11: Hauptsendeeinrichtung
- 13: Hautempfangseinrichtung
- 15: Hauptsendelichtstrahl
- 17: Überwachungsbereich
- 19: überwachungsfreie Zone
- 21: überwachungsfreie Zone
- 23: Zwischenempfangseinrichtung
- 25: Zwischenempfangseinrichtung
- 27: Zwischensendeeinrichtung
- 29: Zwischensendeeinrichtung
- 31: Zwischensendelichtstrahl
- 33: Kabel
- 35: überwachungsfreie Zone
- 37: überwachungsfreie Zone
- 39: überwachungsfreie Zone
- 41: Zwischensendeeinrichtung
- 43: Zwischenempfangseinrichtung
- 45: Steuer- und Auswerteeinheit

- A: Strahlrichtung

## Patentansprüche

1. Lichtgitter zur Überwachung eines flächigen Überwachungsbereichs (17), mit
- wenigstens einer Hauptsendeeinrichtung (11) zum Aussenden von Hauptsendelichtstrahlen (15) in einer Strahlrichtung (A) entlang des Überwachungsbereichs (17),
- wenigstens einer Hauptempfangseinrichtung (13) zum Empfang von Sendelichtstrahlen (15, 31),
- wenigstens einer Zwischenempfangseinrichtung (23) zum Empfang von Hauptsendelichtstrahlen (15), und
- wenigstens einer der Zwischenempfangseinrichtung (23) zugeordneten Zwischensendeeinrichtung (27) zum Aussenden von Zwischensendelichtstrahlen (31) entlang des Überwachungsbereichs (17),
**dadurch gekennzeichnet,**
**daß** zur Ausblendung wenigstens einer überwachungsfreien Zone (19, 21) aus dem Überwachungsbereich (17)
- die Zwischenempfangseinrichtung (23) zum Empfang von Hauptsendelichtstrahlen (15) und gleichzeitig die Hauptempfangseinrichtung (13) zum Empfang von Zwischensendelichtstrahlen (31) und Hauptsendelichtstrahlen (15) konfiguriert ist,
- die Zwischenempfangseinrichtung (23) und die Zwischensendeeinrichtung (27) in der Richtung, die im flächigen Überwachungsbereich (17) liegt und die senkrecht zu der Strahlrichtung (A) verläuft, eine geringere Ausdehnung besitzen als die Hauptsendeeinrichtung (11) und die Hauptempfangseinrichtung (13), und
- die Zwischenempfangseinrichtung (23, 25, 43) und die Zwischensendeeinrichtung (27, 29, 41) beliebig innerhalb des Überwachungsbereichs (17) variabel positionierbar sind, und
**daß** das Lichtgitter dergestalt konfiguriert ist, daß ein Gegenstandsfeststellungssignal erzeugt wird, falls eine Unterbrechung eines Sendelichtstrahls (15, 31) durch einen Gegenstand detektiert wird, der den Überwachungsbereich (17) außerhalb der wenigstens einen überwachungsfreien Zone (19, 21) durchdringt,
wobei die wenigstens eine überwachungsfreie Zone dadurch gebildet wird, daß eine Zwischenempfangseinrichtung (23, 25) Sendelichtstrahlen (15, 31) beabsichtigt unterbricht oder daß Sendelichtstrahlen (31) erst von einer innerhalb des Überwachungsbereichs (17) angeordneten Zwischensendeeinrichtung (27, 29) und somit nicht entlang des gesamten Überwachungsbereichs (17) ausgesendet werden.

2. Lichtgitter nach Anspruch 1,
**dadurch gekennzeichnet,**
**daß** zur Ausblendung mehrerer überwachungsfreien Zonen (19, 21) aus dem Überwachungsbereich (17) mehrere Zwischenempfangseinrichtungen (23, 25) und jeweils zugeordnete Zwischensendeeinrichtungen (27, 29) innerhalb des Überwachungsbereichs (17) positionierbar sind,
wobei eine Zwischenempfangseinrichtung (25) zumindest teilweise durch Zwischensendelichtstrahlen (31) einer Zwischensendeeinrichtung (27) beaufschlagbar ist.

3. Lichtgitter nach einem der vorhergehenden Ansprüche,
**dadurch gekennzeichnet,**
**daß** die Zwischenempfangseinrichtung (23, 25, 43) und die Zwischensendeeinrichtung (27, 29, 41 ) zur räumlich variierenden Ausblendung eines innerhalb des Überwachungsbereichs (17) zu bewegenden Ausblendgegenstandes an dem Ausblendgegenstand angeordnet sind.

4. Lichtgitter nach einem der vorhergehenden Ansprüche,
**dadurch gekennzeichnet,**
**daß** die Hauptsendeeinrichtung (11), die Zwischensendeeinrichtung (27, 29, 41), die Hauptempfangseinrichtung (13) und/oder die Zwischenempfangseinrichtung (23, 25, 43) jeweils mehrere Sendeelemente zum Aussenden der Sendelichtstrahlen (15, 31) bzw. mehrere Empfangselemente zum Empfang der Sendelichtstrahlen aufweisen, wobei die Elemente einer Einrichtung (11, 13, 23, 25, 27, 29, 41, 43) insbesondere linear entlang der Einrichtung angeordnet sind.

5. Lichtgitter nach einem der vorhergehenden Ansprüche,
**dadurch gekennzeichnet,**
**daß** die einzelnen Hauptsendelichtstrahlen (15) gleichsinnig parallel zueinander verlaufen, und/oder
die einzelnen Zwischensendelichtstrahlen (31) gleichsinnig parallel zueinander verlaufen, und/oder
die Hauptsendelichtstrahlen (15) einerseits und die Zwischensendelichtstrahlen (31) andererseits gleichsinnig parallel zueinander verlaufen.

6. Lichtgitter nach einem der vorhergehenden Ansprüche,
**dadurch gekennzeichnet,**
**daß** die Hauptsendeeinrichtung (11), die Hauptempfangseinrichtung (13), die Zwischenempfangseinrichtung (23, 25, 43) und die Zwischensendeeinrichtung (27, 29, 41) miteinander und/oder mit einer Steuer- und Auswerteeinheit (45) signalübertragungsfähig verbunden, insbesondere über flexible Signalübertragungs- und Versorgungskabel (33) verbunden sind.

7. Verfahren zur Überwachung eines Überwachungsbereichs (17), insbesondere mittels eines Lichtgitters nach einem der vorhergehenden Ansprüche,
wobei wenigstens eine Hauptsendeeinrichtung (11) und wenigstens eine Hauptempfangseinrichtung (13) außerhalb sowie wenigstens eine Zwischenempfangseinrichtung (23, 25) und wenigstens eine Zwischensendeeinrichtung (27, 29) innerhalb des Überwachungsbereichs (17) angeordnet werden,
wobei während eines Überwachungsbetriebs die Hauptsendeeinrichtung (11) und die Zwischensendeeinrichtung (27, 29) Sendelichtstrahlen (15, 31) in einer Strahlrichtung (A) entlang des Überwachungsbereichs (17) aussenden, welche die Hauptempfangseinrichtung (13) und die Zwischenempfangseinrichtung (23, 25) zumindest teilweise beaufschlagen,
**dadurch gekennzeichnet,**
**daß** zur Ausblendung wenigstens einer überwachungsfreien Zone (19, 21) aus dem Überwachungsbereich (17)
- die Zwischenempfangseinrichtung (23) Hauptsendelichtstrahlen (15) empfängt und gleichzeitig die Hauptempfangseinrichtung (13) Zwischensendelichtstrahlen (31) und Hauptsendelichtstrahlen (15) empfängt,
- die Zwischenempfangseinrichtung (23) und die Zwischensendeeinrichtung (27) in der Richtung, die im flächigen Überwachungsbereich (17) liegt und die senkrecht zu der Strahlrichtung (A) verläuft, eine geringere Ausdehnung besitzen als die Hauptsendeeinrichtung (11) und die Hauptempfangseinrichtung (13), und
- die Zwischenempfangseinrichtung (23, 25, 43) und die Zwischensendeeinrichtung (27, 29, 41) beliebig innerhalb des Überwachungsbereichs (17) variabel positioniert werden und
**daß** ein Gegenstandsfeststellungssignal erzeugt wird, falls eine Unterbrechung eines Sendelichtstrahls (15, 31) durch einen Gegenstand detektiert wird, der den Überwachungsbereich (17) außerhalb der wenigstens einen überwachungsfreien Zone (19, 21) durchdringt, wobei die wenigstens eine überwachungsfreie Zone dadurch gebildet wird, daß eine Zwischenempfangseinrichtung (23, 25) Sendelichtstrahlen (15, 31) beabsichtigt unterbricht oder daß Sendelichtstrahlen (31) erst von einer innerhalb des Überwachungsbereichs (17) angeordneten Zwischensendeeinrichtung (27, 29) und somit nicht entlang des gesamten Überwachungsbereichs (17) ausgesendet werden.

8. Verfahren nach Anspruch 7,
**dadurch gekennzeichnet,**
**daß** alle Sendeeinrichtungen (11, 27, 29, 41) die jeweiligen Sendelichtstrahlen (15, 31) gleichzeitig aussenden.

## Claims

1. A light grid for the monitoring of an areal monitored zone (17), comprising
- at least one main transmitter device (11) for the transmission of main transmitted light beams (15) in a beam direction (A) along the monitored zone (17);
- at least one main receiver device (13) for the reception of transmitted light beams (15, 31);
- at least one intermediate receiver device (23) for the reception of main transmitted light beams (15); and
- at least one intermediate transmitter device (27) associated with the intermediate receiver device (23) for the transmission of intermediate transmitted light beams (31) along the monitored zone (17); **characterised**
**in that**, for the masking out of at least one monitoring-free zone (19, 21) from the monitored zone (17),
- the intermediate receiver device (23) is configured for the reception of main transmitted light beams (15) and the main receiver device (13) is simultaneously configured for the reception of intermediate transmitted light beams (31) and of main transmitted light beams (15);
- the intermediate receiver device (23) and the intermediate transmitter device (27) have a lower extent in the direction lying in the areal monitored zone and extending perpendicular to the beam direction (A) than the main transmitter device (11) and the main receiver device (13); and
- the intermediate receiver device (23, 25, 43) and the intermediate transmitter device (27, 29, 41) can be variably positioned as desired inside the monitored zone (17); and
**in that** the light grid is configured such that an object detection signal is produced if an interruption of a transmitted light beam (15, 31) by an object is detected which passes through the monitored zone (17) outside the at least one monitoring-free zone (19, 21), with the at least one monitoring-free zone being formed in that an intermediate receiver device (23, 25) intentionally interrupts transmitted light beams (15, 31) or in that transmitted light beams (31) are only transmitted from an intermediate transmitter device (27, 29) arranged inside the monitored zone (17) and are thus not transmitted along the total monitored zone (17).

2. A light grid in accordance with claim 1, **characterised in that**, for the masking out of a plurality of monitoring-free zones (19, 21) from the monitored zone (17), a plurality of intermediate receiver devices (23, 25) and respectively associated intermediate transmitter devices (27, 29) are positionable inside the monitored zone (17), with an intermediate receiver device (25) being able to be at least partly acted on by intermediate transmitted light beams (31) of an intermediate transmitter device (27).

3. A light grid in accordance with any one of the preceding claims, **characterized in that**, for the spatially varying masking out of a masked object to be moved inside the monitored zone (17), the intermediate receiver device (23, 25, 43) and the intermediate transmitter device (27, 29, 41) are arranged at the masked object.

4. A light grid in accordance with any one of the preceding claims, **characterized in that** the main transmitter device (11), the intermediate transmitter device (27, 29, 41), the main receiver device (13) and/or the intermediate receiver device (23, 25, 43) each have a plurality of transmitter elements for the transmission of the transmitted light beams (15, 31) or a plurality of receiver elements for the reception of the transmitted light beams, with the elements of a device (11, 13, 23, 25, 27, 29, 41, 43) in particular being arranged in a linear fashion along the device.

5. A light grid in accordance with any one of the preceding claims, **characterized in that** the individual main transmitted light beams (15) extend in the same direction parallel to one another; and/or **in that** the individual intermediate transmitted light beams (31) extend in the same direction parallel to one another; and/or **in that** the main transmitted light beams (15), on the one hand, and the intermediate transmitted light beams (31), on the other hand, extend in the same direction parallel to one another.

6. A light grid in accordance with any one of the preceding claims, **characterized in that** the main transmitter device (11), the main receiver device (13), the intermediate receiver device (23, 35, 43) and the intermediate transmitter device (27, 29, 41) are connected to one another and/or to a control and evaluation unit (45) in a manner capable of transmitting signals, and are in particular connected via flexible signal transmission cables and via supply cables (33).

7. A method for the monitoring of a monitored zone (17), in particular by means of a light grid in accordance with any one of the preceding claims,
wherein at least one main transmitter device (11) and at least one main receiver device (13) are arranged outside the monitored zone (17) and at least one intermediate receiver device (23, 25) and at least one intermediate transmitter device (27, 29) are arranged inside the monitored zone (17);
wherein the main transmitter device (11) and the intermediate transmitter device (27, 29) transmit transmitted light beams (15, 13) in a beam direction (A) along the monitored zone (17) during monitoring operation, said transmitted light beams acting at least in part on the main receiver device (13) and on the intermediate receiver device (23, 25),
**characterised in that**, for the masking out of at least one monitoring-free zone (19, 21) from the monitored zone (17),
- the intermediate receiver device (23) receives main transmitted light beams (15) and the main receiver device (13) simultaneously receives intermediate transmitted light beams (31) and main transmitted light beams (15);
- the intermediate receiver device (23) and the intermediate transmitter device (27) have a lower extent in the direction lying in the areal monitored zone (17) and extending perpendicular to the beam direction (A) than the main transmitter device (11) and the main receiver device (13); and
- the intermediate receiver device (23, 25, 43) and the intermediate transmitter device (27, 29, 41) are variably positioned as desired inside the monitored zone (17); and
**in that** an object detection signal is produced if an interruption of a transmitted light beam (15, 31) by an object is detected which passes through the monitored zone (17) outside the at least one monitoring-free zone (19, 21), with the at least one monitoring-free zone being formed **in that** an intermediate receiver device (23, 25) intentionally interrupts transmitted light beams (15, 31) or **in that** transmitted light beams (31) are only transmitted from an intermediate transmitter device (27, 29) arranged inside the monitored zone (17) and are thus not transmitted along the total monitored zone (17).

8. A method in accordance with claim 7, **characterised in that** all transmitter devices (11, 27, 29, 41) substantially simultaneously transmit the respective transmitted light beams (15, 31).

## Revendications

1. Réseau optique de surveillance d'une zone plane à surveiller (17), lequel comporte :
- au moins un dispositif d'émission principal (11) servant à émettre des rayons lumineux principaux (15) dans une direction de rayonnement (A) le long de la zone à surveiller (17),
- au moins un dispositif de réception principal (13) servant à recevoir des rayons lumineux (15, 31),
- au moins un dispositif de réception intermédiaire (23) servant à recevoir des rayons lumineux principaux (15), et
- au moins un dispositif d'émission intermédiaire (27) associé au dispositif de réception intermédiaire (23) servant à envoyer des rayons lumineux intermédiaires (31) le long de la zone à surveiller (17),
**caractérisé en ce que** pour neutraliser au moins une zone non surveillée (19, 21) dans la zone à surveiller (17) :
- le dispositif de réception intermédiaire (23) est configuré pour recevoir des rayons lumineux principaux (15) et, en même temps, le dispositif de réception principal (13) est configuré pour recevoir des rayons lumineux intermédiaires (31) et des rayons lumineux principaux (15),
- le dispositif de réception intermédiaire (23) et le dispositif d'émission intermédiaire (27) ont, dans la direction qui se trouve dans la zone plane à surveiller (17) et qui s'étend perpendiculairement à la direction de rayonnement (A), une taille inférieure au dispositif d'émission principal (11) et au dispositif de réception principal (13), et
- le dispositif de réception intermédiaire (23, 25, 43) et le dispositif d'émission intermédiaire (27, 29, 41) peuvent être librement placés de manière variable à l'intérieur de la zone à surveiller (17), et
**en ce que** le réseau optique est configuré de telle sorte qu'un signal de constatation d'objet est produit lorsque l'on détecte l'interruption d'un rayon lumineux (15, 31) parce qu'un objet traverse la zone à surveiller (17) en dehors de la ou des zones non surveillées (19, 21),
la au moins une zone non surveillée étant formée de telle manière qu'un dispositif de réception intermédiaire (23, 25) interrompt volontairement les rayons lumineux (15, 31) ou de telle manière que des rayons lumineux (31) sont seulement envoyés par un dispositif d'émission intermédiaire (27, 29) disposé à l'intérieur de la zone à surveiller (17) et ne sont par conséquent pas envoyés le long de la totalité de la zone à surveiller (17).

2. Réseau optique selon la revendication 1,
**caractérisé en ce que**, pour neutraliser plusieurs zones non surveillées (19, 21) dans la zone à surveiller (17), plusieurs dispositifs de réception intermédiaires (23, 25) et des dispositifs d'émission intermédiaires (27, 29) respectivement associés peuvent être placés à l'intérieur de la zone à surveiller (17),
un dispositif de réception intermédiaire (25) pouvant être frappé au moins partiellement par les rayons lumineux intermédiaires (31) d'un dispositif d'émission intermédiaire (27).

3. Réseau optique selon l'une des revendications précédentes,
**caractérisé en ce que** le dispositif de réception intermédiaire (23, 25, 43) et le dispositif d'émission intermédiaire (27, 29, 41), qui servent à neutraliser de manière variable dans l'espace un objet à neutraliser devant être déplacé à l'intérieur de la zone à surveiller (17), sont disposés au niveau de l'objet à neutraliser.

4. Réseau optique selon l'une des revendications précédentes,
**caractérisé en ce que** le dispositif d'émission principal (11), le dispositif d'émission intermédiaire (27, 29, 41), le dispositif de réception principal (13) et/ou le dispositif de réception intermédiaire (23, 25, 43) comportent chacun, selon le cas, plusieurs éléments d'émission servant à envoyer les rayons lumineux (15, 31) ou plusieurs éléments de réception servant à recevoir les rayons lumineux,
les éléments d'un dispositif (11, 13, 23, 25, 27, 29, 41, 43) étant disposés, notamment, de manière linéaire le long du dispositif.

5. Réseau optique selon l'une des revendications précédentes,
**caractérisé en ce que** les différents rayons lumineux principaux (15) s'étendent parallèlement entre eux dans le même sens, et/ou
les différents rayons lumineux intermédiaires (31) s'étendent parallèlement entre eux dans le même sens, et/ou
les rayons lumineux principaux (15), d'une part, et les rayons lumineux intermédiaires (31), d'autre part, s'étendent parallèlement entre eux dans le même sens.

6. Réseau optique selon l'une des revendications précédentes,
**caractérisé en ce que** le dispositif d'émission principal (11), le dispositif de réception principal (13), le dispositif de réception intermédiaire (23, 25, 43) et le dispositif d'émission intermédiaire (27, 29, 41) sont reliés entre eux et/ou à une unité de commande et d'exploitation (45) de manière à pouvoir transmettre un signal, notamment par l'intermédiaire de câbles flexibles de transmission de signal et d'alimentation (33).

7. Procédé de surveillance d'une zone à surveiller (17), notamment au moyen d'un réseau optique selon l'une des revendications précédentes,
dans lequel au moins un dispositif d'émission principal (11) et au moins un dispositif de réception principal (13) sont disposés à l'extérieur de la zone à surveiller (17) et dans lequel au moins un dispositif de réception intermédiaire (23, 25) et au moins un dispositif d'émission intermédiaire (27, 29) sont disposés à l'intérieur de ladite zone à surveiller,
dans lequel, pendant un processus de surveillance, le dispositif d'émission principal (11) et le dispositif d'émission intermédiaire (27, 29) envoient des rayons lumineux (15, 31) dans une direction de rayonnement (A) le long de la zone à surveiller (17), lesquels frappent au moins partiellement le dispositif de réception principal (13) et le dispositif de réception intermédiaire (23, 25),
**caractérisé en ce que**,
pour neutraliser au moins une zone non surveillée (19, 21) dans la zone à surveiller (17) :
- le dispositif de réception intermédiaire (23) reçoit des rayons lumineux principaux (15) et, en même temps, le dispositif de réception principal (13) reçoit des rayons lumineux intermédiaires (31) et des rayons lumineux principaux (15),
- le dispositif de réception intermédiaire (23) et le dispositif d'émission intermédiaire (27) ont, dans la direction qui se trouve dans la zone plane à surveiller (17) et qui s'étend perpendiculairement à la direction de rayonnement (A), une taille inférieure au dispositif d'émission principal (11) et au dispositif de réception principal (13), et
- le dispositif de réception intermédiaire (23, 25, 43) et le dispositif d'émission intermédiaire (27, 29, 41) sont librement placés de manière variable à l'intérieur de la zone à surveiller (17) et
**en ce qu'**un signal de constatation d'objet est produit lorsque l'on détecte l'interruption d'un rayon lumineux (15, 31) parce qu'un objet traverse la zone à surveiller (17) en dehors de la ou des zones non surveillées (19, 21),
la ou les zones non surveillées étant formées de telle manière qu'un dispositif de réception intermédiaire (23, 25) interrompt volontairement des rayons lumineux (15, 31) ou de telle manière que des rayons lumineux (31) sont seulement envoyés par un dispositif d'émission intermédiaire (27, 29) disposé à l'intérieur de la zone à surveiller (17) et ne sont par conséquent pas envoyés le long de la totalité de la zone à surveiller (17).

8. Procédé selon la revendication 7,
**caractérisé en ce que** tous les dispositifs d'émission (11, 27, 29, 41) envoient en même temps leurs rayons lumineux respectifs (15, 31).
